# EUROPEAN PATENT APPLICATION

(11) **EP 4 361 484 A1**
(43) Date of publication of application: **01.05.2024**
(21) Application number: 23164136.6
(22) Date of filing: 24.03.2023
(51) Int. Cl.: F16L 19/02, F16L 19/025, F25B 41/35

(54) **CONNECTOR MODULE FOR FLUIDLY CONNECTING A FLUID SYSTEM TO A FUNCTION MODULE, ASSEMBLY COMPRISING A CONNECTOR MODULE AND METHOD FOR FLUIDLY CONNECTING A FLUID SYSTEM TO A CONNECTOR MODULE**

(30) Priority: 26.10.2022 EP 22203958
(71) Applicant: Danfoss A/S, 6430 Nordborg (DK)
(72) Inventor: Van Beek, Johan, 6430 Nordborg (DK)
(74) Representative: Patentanwälte Olbricht Buchhold Keulertz

(57) **Abstract**

Connector module (1) for fluidly connecting a fluid system to a function module (2), comprising a housing (10) with at least one fluid port (11) and at least one connector (20) fluidly connected to the fluid port (11), the connector (20) comprising an adaptor (21), a union nut (22), a union nut interface (23), a metal gasket (24) and at least one O-ring (25), wherein the metal gasket (24) is deformed by the union nut (22) pressing it via the adaptor (21) against the union nut interface (23) and the metal gasket (24) fluidly seals the adaptor (21) to the union nut interface (23).

## Description

The present invention pertains to a connector module for fluidly connecting a fluid system to a function module or for fluidly connecting two or more external fluid conduits to each other. The connector module comprises a housing with at least one fluid port and at least one connector fluidly connected to the fluid port. The connector comprises an adaptor, a union nut, a union nut interface, a metal gasket and at least one O-ring, wherein the metal gasket is deformed by the union nut pressing it via the adaptor against the union nut interface and the metal gasket fluidly seals the adaptor to the union nut interface.

The invention is also directed at an assembly comprising a connector module with a function module, wherein the function module comprises a solenoid valve with or without a servo mechanism, a stepper valve, a check valve, a sight glass, a filter dryer, a dryer, a temperature sensor, a pressure sensor, a preferably brazed plate heat exchanger and/or a service valve.

The invention also pertains to a method for fluidly connecting a fluid system to a connector module.

Connector modules are known to be used with fluid systems such as e.g. heat-pump arrangements. The connector modules provide means for fluidly connecting the fluid system to peripheral devices such as e.g. sensors or actuators.

A problem arising with the known connector modules is that they may be difficult to integrate into the corresponding fluid system. In particular, the positioning, connection, maintenance and replacement of the connector module may be complicated by limited space available for these tasks and by intricate process steps for performing the above tasks.

The aim of the present invention is to overcome this problem by providing an improved connector module, an improved assembly comprising a connector module and an improved method for fluidly connecting a fluid system to a connector module. This aim is achieved by a connector module according to claims 1 and 10, an assembly according to claim 9 and a method according to claim 10. Preferable embodiments of the invention are subject to the dependent claims.

According to claim 1, a connector module for fluidly connecting a fluid system to a function module is provided according to a first aspect of the invention. The fluid system may be any fluid system in which a working fluid is used, such as e.g. a heat pump. The connector module comprises a housing with at least one fluid port and at least one connector fluidly connected to the fluid port. The term function module may be understood in a broad sense and may refer to a module providing any functionality to the fluid system. In a simple embodiment, the function module may be identical with the housing and may provide a fluid connection between two or more external fluid conduits.

The connector provides a means for connecting the housing to a fluid system. It comprises an adaptor, a union nut, a union nut interface, a metal gasket and at least one O-ring. The O-ring provides a fluid barrier between the outside atmosphere of the connector and an internal portion of the connector. The term O-ring may be understood in a broad sense and may refer to a radially sealed elastomer element. The metal gasket is deformed by the union nut pressing via the adaptor against the union nut interface.

The deformation of the gasket goes beyond the elastic deformation, which usually occurs, when components are forced against each other. The deformation of the gasket may be a plastic deformation. The deformation of the gasket may change the initially planar geometry of the gasket into a non-planar geometry.

The union nut and the union nut interface may comprise matching threads such that they may be screwed to each other. The metal gasket may be provided at a position between the union nut and the adaptor on the one side and the union nut interface on the other side.

Thus, upon screwing the union nut to the union nut interface, the metal gasket may be compressed and deformed between said adjacent components.

In a position, in which the metal gasket is compressed between the adaptor and the union nut interface, the metal gasket fluidly seals the adaptor to the union nut interface. An external end of the adaptor opposite the metal gasket is provided for being connected to some fluid conduit, preferably at a customer site. The adaptor may be provided for facilitating its connection to a fluid conduit via e.g. some thermal joining process.

In a preferred embodiment of the invention, the metal gasket is deformed by the union nut pressing against the union nut interface such that the deformed metal gasket comprises at least two distinct sealing portions which are angled to each other. The deformation of the gasket may ensure that the gasket contacts its adjacent components as closely as possible. This close contact improves the sealing provided by the gasket. The deformation of the gasket may further stabilise the relative positioning of the union nut interface and the adaptor.

In a particularly preferred embodiment of the invention, a first sealing portion of the metal gasket extends in a radial direction of the connector and/or is of a circular shape with a preferably centrally positioned circular opening. A second sealing portion of the metal gasket is of a conical shape. The first sealing portion may remain oriented in substantially the same direction before and after the pressing of the union nut against the union nut interface. However, the second sealing portion may be substantially reoriented during the pressing of the union nut against the union nut interface.

The radial and axial directions of the connector may be referenced to the fluid flow direction through the connector. The axial direction may correspond to the principal fluid flow direction though the connector and the radial direction may be referenced to this axial direction, i.e. perpendicular to the axial direction.

In another preferred embodiment of the invention, the metal gasket comprises a hollow cylindrical portion extending in an axial direction of the connector, wherein preferably the hollow cylindrical portion is provided between either of the adaptor or union nut interface and the union nut. The hollow cylindrical portion may further increase the stability of the connection between the adaptor and the union nut interface.

In another preferred embodiment of the invention, at least one of the adaptor and the union nut interface comprises a protrusion and/or a recess for pressing against the metal gasket and/or the union nut interface is formed integrally with or brazed to the housing.

A protrusion of the adaptor may be positioned opposite a recess of the union nut interface and/or vice versa, such that the gasket may be deformed between opposite pairs of recesses and protrusions.

In another preferred embodiment of the invention, a contact portion is provide for transmitting a force between the union nut and the adaptor, wherein preferably the contact portion comprises a toroidal component contacting the union nut and the adaptor and/or contact surfaces of the union nut and the adaptor. The toroidal component may be a wire, which is insertable between the union nut and the adaptor through an opening in the union nut. Circumferential groves may be provided in the union nut and the adaptor for accommodating the wire. The wire may fill the groves such that it fixes the union nut and the adaptor with respect to each other in an axial direction of the connector.

In another preferred embodiment of the invention, the union nut is a male or a female union nut. A male union nut may be insertable into the union nut interface while a female union nut may receive the union nut interface. The invention may be carried out with any combination of female or male union nuts.

In another preferred embodiment of the invention, the connector module is connected to a function module and/or comprises at least two connectors and/or the housing comprises at least two fluid ports. The housing may comprise further fluid ports for e.g. fluidly connecting the function module. The fluid ports may be aligned coaxially and/or at various angles to each other, depending on the number of fluid ports and the desired orientation of the fluid ports.

In another preferred embodiment of the invention, the metal gasket is made of a softer metal alloy than its adjacent components and/or the adaptor is a copper plated adaptor. The softer material of the gasket ensures that the gasket is deformed when a force is exerted upon the gasket by the adaptor and the union nut interface. The softer material of the gasket may be copper or aluminium, preferably high grade aluminium, or a copper or aluminium alloy. The copper plating of the adaptor facilitates the connection of the adaptor to some external fluid conduits, which may be made of copper and which may be brazed or otherwise connected to the adaptor.

The invention is also directed at an assembly comprising a connector module, wherein the function module comprises a solenoid valve with or without a servo mechanism, a stepper valve, a check valve, a sight glass, a filter dryer, a dryer, a temperature sensor, a pressure sensor, a preferably brazed plate heat exchanger and/or a service valve. The servo mechanism may comprise a piston and/or a diaphragm.

The invention is also directed at a connector module for fluidly connecting two or more external fluid conduits. The connector module of this second aspect of the invention comprises a housing with at least two fluid ports and at least one connector fluidly connected to one of the fluid ports, the connector comprising an adaptor, a union nut, a union nut interface, a metal gasket and at least one O-ring, wherein the metal gasket is deformed by the union nut pressing it via the adaptor against the union nut interface and the metal gasket fluidly seals the adaptor to the union nut interface.

The union nut interface may be formed integrally with the housing. The connector may comprise a number of separate and/or interacting components, such as the adaptor and the union nut, which facilitate the connection of external fluid conduits to each other.

In a preferred embodiment of the invention, the union nut is screwed into the housing and/or the union nut is positioned at least partially between the radially inner adaptor and the radially outer housing. In this embodiment, the union nut may comprise an external thread for connecting the union nut to the housing. The housing may comprise a corresponding internal thread.

The connector module of the second aspect may comprise any of the presently described features and especially features described with reference to claims 2 to 7.

In another preferred embodiment of the invention, the connector module is connected to a function module and/or comprises at least two connectors and/or the metal gasket is made of a softer metal alloy than its adjacent components and/or the adaptor is a copper plated adaptor.

The function module may be identical to the housing. The function module may comprise some functional components such as sensors and/or valves. Both, the function module and the housing components may be formed as one integral part or they may be formed as separate parts, which may be spaced apart or in close contact with each other.

The invention is also directed at a method for fluidly connecting a fluid system to a connector module, the method comprising the steps of:
inserting the adaptor into the union nut;
brazing an external fluid conduit to the adaptor;
providing the metal gasket between the adaptor and the union nut interface;
providing the O-ring to the adaptor; and
screwing the union nut to the union nut interface while deforming the gasket.

The invention makes it possible to perform the brazing of the external fluids conduits while temperature sensitive components such as the O-ring are at a distance from the brazed parts. This reduces the risk of thermal damage to the temperature sensitive components. Once the brazing has been performed and the brazed parts are no longer exposed to excessive heat, further connecting steps may be performed, including the connection of heat sensitive components such as the O-ring.

The method may comprise any further steps required for connecting the presently described connector module and its various features. The method steps may be carried out in any logically possible order.

Further details and advantages of the invention are described with reference to the embodiments shown in the figures. The figures show:
- Fig. 1:: an exploded view of an embodiment of the connector module according to the first aspect of the invention;
- Fig. 2:: side view of the connector module;
- Fig. 3:: a cross-sectional view of the connector module;
- Figs. 4a, 4b:: detailed cross-sectional views of the connector module;
- Fig. 5:: a cross-sectional view of another embodiment of the connector module;
- Fig. 6:: a detailed cross-sectional view of another embodiment of the connector module;
- Fig. 7:: a detailed cross-sectional view of the connector module according to the second aspect of the invention;
- Fig. 8:: a cross-sectional view of the connector module according to the second aspect of the invention; and
- Figs. 9a-9c:: various implementations of the connector module.

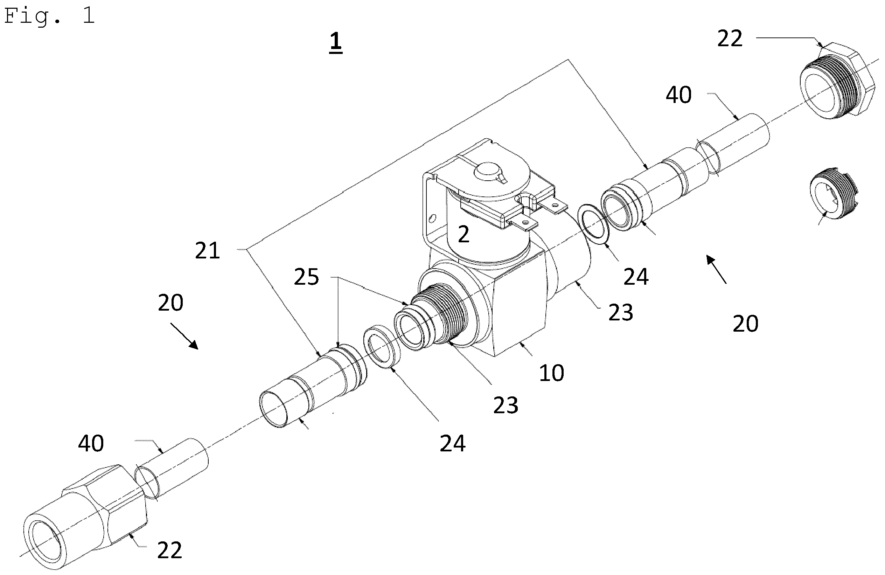

Figure 1 shows an exploded view of an embodiment of the connector module 1. The connector module 1 is provided for fluidly connecting a fluid system to a function module 2. The function module 2 may be any component, which e.g. interacts with the fluid inside the connector module 1. In the embodiment of figure 1, the function module 2 may be an actuator valve for controlling a fluid flow inside the connector module 1. In general, the function module 2 may comprise a solenoid valve with or without a servo mechanism, a stepper valve, a check valve, a sight glass, a filter dryer, a dryer, a temperature sensor, a pressure sensor and/or a service valve.

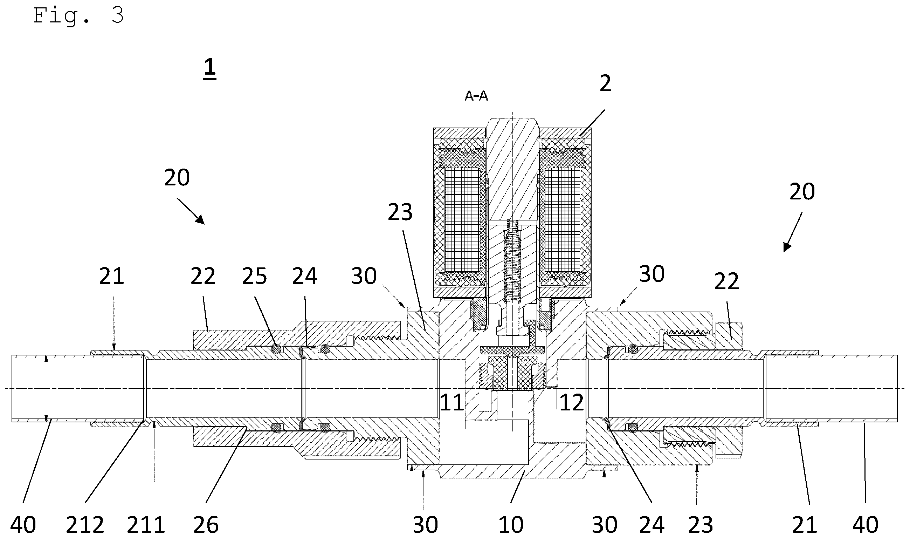

The fluid system connected to the connector module 1 may be any fluid system in which a working fluid is used, such as e.g. a heat pump. The connector module 1 comprises a housing 10 with at least one fluid port 11, 12 shown in figure 3. The connector module 1 comprises at least one connector 20 fluidly connected to the fluid port 11, 12 of the housing 10.

In the embodiment of figure 1, two connectors 20 are arranged opposite each other and aligned coaxially to each other. The connector 20 is a tubular structure and it comprises several interconnected components.

The housing 10 may be a central part of the connector module 1, to which the connector 20 or the connectors 20 and the function module 2 are connected. The housing 10 and the function module 2 may comprise overlapping features and/or they may be formed integrally. For example, if the function module 2 comprises some valve components, the housing 10 may comprise a valve seat interacting with the valve components of the function module 2. In an embodiment, in which the connector module 1 provides a connection between two or more external fluid conduits 40, the function module 2 may be fully integrated in the housing 10 and/or formed integrally with the housing. In this case, the housing 10 is a connection means for connecting said external fluid conduits 40.

The connector 20 or the connectors 20 and the function module 2 may be oriented away from the center of the housing 10.

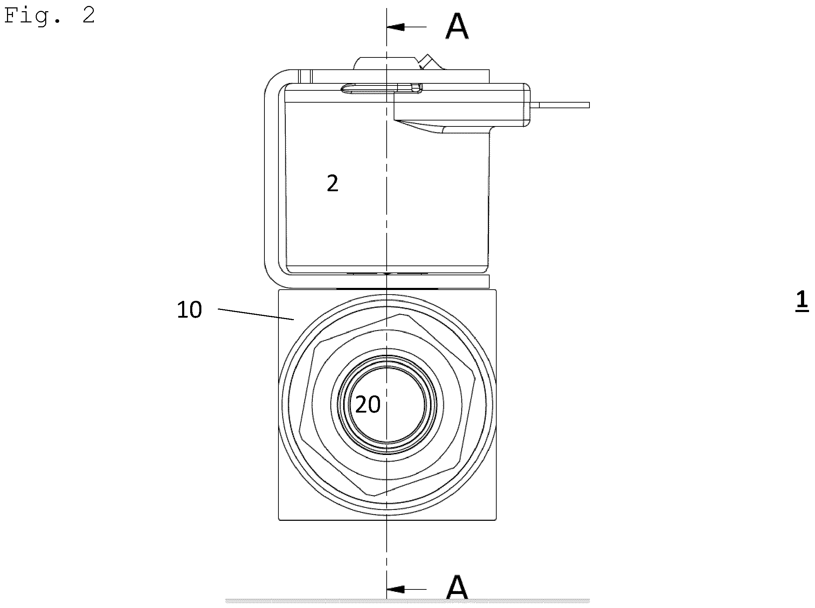

Figure 2 shows a side view of the connector module 1. The housing 10 may be cube shaped, the connector 20 points in a direction perpendicular to the drawing plane. The function module 2 is oriented perpendicular to the connector 20 and points in the vertical direction of the figure.

Figure 3 is a cross-sectional view of the connector module 1 along plane A-A shown in figure 2. The housing 10 is welded via laser welds 30 to the union nut interfaces 23. In an alternative embodiment, the union nut interface 23 may be formed integrally with or brazed to the housing 10. The laser welds 30 seal off the connection between the union nut interface 23 and the housing 10.

Inside the housing, two fluid ports 11, 12 are shown fluidly connected to the connectors 20. The function module 2 shown connected to the top of the housing 10 may be fluidly connected to the interior of the housing 10 via another fluid port.

The two connectors 20 of the embodiment of figure 3 provide a means for fluidly connecting the inside of the housing 10 to an external fluid system not shown in the figures and to the function module 2. The function module 2 may be provided for interacting with the fluid inside the connector module 1 in any desired way.

Each of the two shown connectors 20 comprises an adaptor 21, a union nut 22, a union nut interface 23, a metal gasket 24 and at least one O-ring 25. The O-ring 25 provides a fluid barrier between the outside atmosphere of the connector 20 and an internal portion of the connector 20. The adaptor 21 may allow brazing of external fluid conduits 40, which are made of copper, aluminium, stainless steel or other materials. The adaptor 21 may allow press- fitting of the external fluid conduits 40 to the adaptor 21. The metal gasket 24 is not solidly connected to the adaptor 21 or the union nut interface 23, hence it may be easily replaced.

The union nut 22 deforms the metal gasket 25 pressing it via the adaptor 21 against the union nut interface 23. The metal gasket 25 may have a flat or otherwise simple form when inserted between the adaptor 21 and the union nut interface 23. Once the adaptor 21 presses the gasket 24 against the union nut interface 23, the shape of the gasket 24 may be changed to a more complex form. The adaptor 21 facilitates the connection of the connector module 1 to an external fluid conduit 40 via e.g. brazing. The external end of the adaptor 21 opposite the metal gasket 24 is provided for being connected to the fluid conduit 40, preferably at a customer site. The external end of the adaptor 21 is positioned outside the union nut 22 and outside the union nut interface 23. The adaptor 21 may be provided for facilitating its connection to the fluid conduit 40 via e.g. some thermal joining process. The union nut 22 may comprise a hexagonal exterior face and/or parallel faces for special tools for screwing and unscrewing the union nut 22. The parallel faces limit the access to the union nut 22 to e.g. qualified personnel in possession of said special tools.

The union nut 22 and the union nut interface 23 may comprise matching threads such that they may be screwed to each other. The threads of the connector 20 shown on the left side are situated between the housing 10 and the metals gasket 24, while the gasket 24 of the connector 20 shown on the right side is situated between the housing 10 and the threads.

The metal gasket 24 may be provided at a position between the union nut 22 and the adaptor 21 on the one side and the union nut interface 23 on the other side. Thus, upon screwing the union nut 22 to the union nut interface 23, the metal gasket 2 may be compressed between said adjacent components. The inner radius of the gasket 24 may be equal to the inner radius of the adaptor 21.

The adaptor 21 may comprise an external circumferential groove 211 as a heat conductance blocker 211. Inside the adaptor 21, an abutment 212 may be provided for abutting the external fluid conduit 40. The abutment 212 may be a portion of the adaptor 21, in which the internal diameter of the adaptor 21 is significantly reduced. The abutment 212 and the heat conductance blocker 211 may be provided in direct vicinity to each other, separated from each other in the axial direction of the adaptor 21 by a distance smaller than the diameter of the adaptor 21, preferably smaller than a fifth or a tenth of the diameter of the adaptor 21.

A contact portion 26 may be provide for transmitting a force between the union nut 22 and the adaptor 21. In the embodiment of figure 3, the contact portion 26 comprises contact surfaces of the union nut 22 and the adaptor 21, which are in direct contact with each other and transfer the force between the union nut 22 and the adaptor 21 in the horizontal or axial direction, while the union nut 22 presses against the adaptor 21.

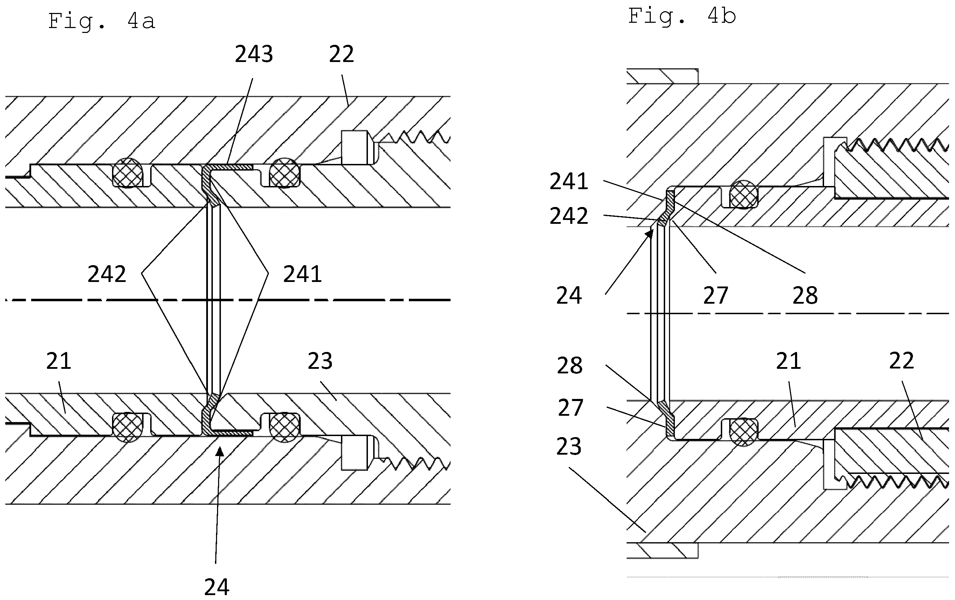

Figures 4a and 4b show detailed cross-sectional views of the connector module 1 of figures 1 to 3. Figure 4a shows a detail of the left connector 20 of figure 3 with a female union nut 22 while figure 4b shows a detail of the right connector 20 of figure 3 with a male union nut 22. In both cases, the metal gasket 24 is shown to be compressed between the adaptor 21 and the union nut interface 23. The metal gasket 24 is shown to be deformed from its initial flat shape. The metal gasket 24 fluidly seals the adaptor 21 to the union nut interface 23.

The metal gasket 24 is deformed by the union nut 22 pressing against the union nut interface 23 and via the adaptor 21 such that the deformed metal gasket 24 comprises at least two distinct sealing portions 241, 242, which are angled to each other. The deformation of the gasket 24 may ensure that the gasket 24 contacts its adjacent components as closely as possible. This close contact improves the seating of and the sealing provided by the gasket 24. The deformation of the gasket 24 may further stabilise the relative positioning of the union nut interface 23 and the adaptor 21

A first sealing portion 241 of the metal gasket 24 may extend in a radial direction of the connector 20 and it may be of a circular shape with a preferably centrally positioned circular opening. A second sealing portion 242 preferably adjacent to the first sealing portion 241 of the metal gasket 24 may be of a conical shape. The first sealing 241 portion may remain oriented in substantially the same direction before and after the pressing of the union nut 22 against the adaptor 21 union nut interface 23. However, the second sealing portion 242 may be substantially reoriented during the pressing of the union nut 22 against the adaptor 21 and the union nut interface 23.

The radial and axial directions of the connector 20 and other components of the connector module 1 may be referenced to the fluid flow direction through the connector 20. The axial direction may correspond to the principal fluid flow direction though the connector 20 as indicated by the horizontal dashed line in figures 4a and 4b. The radial direction may be referenced to this axial direction, i.e. it may be perpendicular to the axial direction.

The metal gasket 24 of figure 4a comprises a hollow cylindrical portion 243 extending in an axial direction of the connector 20. The hollow cylindrical portion 243 is provided between union nut interface 23 and the union nut 22. The outer diameter of the union nut interface 23 may be smaller than the outer diameter of the adaptor 21 close to the gasket 24 such that the hollow cylindrical portion 243 may be inserted between the union nut interface 23 and the union nut 22. The hollow cylindrical portion 243 may increase the stability of the connection between the adaptor 21 and the union nut interface 23.

In the embodiments of figures 4a and 4b, the adaptor 21 and the union nut interface 34 each comprise a protrusion 27 and recess 28 for pressing against the metal gasket 24. The protrusions 27 and recesses 28 are indicated by corresponding reference numbers in figure 4b. A protrusion 27 of the adaptor 21 may be positioned opposite a recess 28 of the union nut interface 23 and vice versa. The protrusions 27 and recesses 28 may be arranged in a circumferential direction around the axial direction of the adaptor 21. The gasket 24 is therefore deformed between and held in place by opposite pairs of recesses 28 and protrusions 27.

The union nut 22 shown in figure 4a is a female union nut 22 while the union nut 22 shown in figure 4b is a male union nut 22. The male union nut 22 of figure 4b is inserted into the union nut interface 23, while the female union nut 22 of figure 4a receives the union nut interface 23. The invention may be carried out with any combination of female or male union nuts 22.

The metal gasket 24 may be made of a softer metal alloy than its adjacent components. The softer material of the gasket 24 ensures that the gasket 24 is deformed sufficiently and in a predefined manner when a force is exerted upon the gasket 24 by the adaptor 21 and the union nut interface 23. At the same time, the shapes of the adaptor 21 and the union nut interface 23 remain substantially unchanged.

The adaptor 21 may be a copper plated adaptor, wherein preferably the copper plating may be applied to the interior side of the adaptor 21. The copper plating of the adaptor 21 facilitates the connection of the adaptor 21 to the external fluid conduits 40 shown in e.g. figure 3. The external fluid conduits 40 may be made of copper and may be brazed or otherwise connected to the adaptor 21.

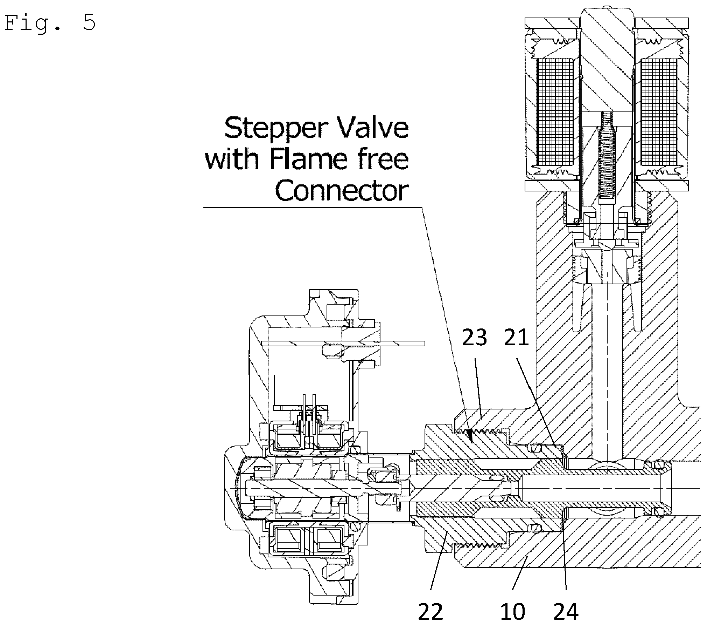

Figure 5 is a cross-sectional view of another embodiment of the connector module 1. Here, the adaptor 21 is formed integrally with the union nut 22. The union nut interface 23 is formed integrally with the housing 10. The adaptor 21 pushes against the gasket 24. The housing 10 and the union nut 22 are in direct contact with the gasket 24 and press and deform it into its shown shape.

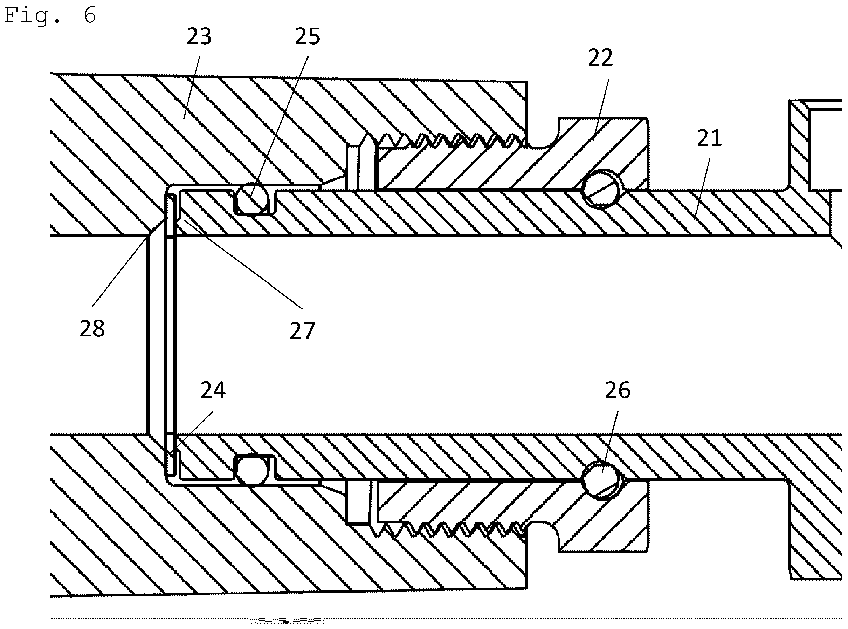

Figure 6 is a detailed cross-sectional view of another embodiment of the connector module 1, in which the contact portion 26 comprises a toroidal component contacting the union nut 22 and the adaptor 21. The toroidal component may be a wire, which is insertable between the union nut 22 and the adaptor 21 through an opening in the union nut 22. Circumferential groves may be provided at a radially internal surface of the union nut 22 and a radially external surface of the adaptor 21 for accommodating the wire.

The opening in the union nut 22 is not shown in the figure. The opening in the union nut 22 may connect the radially internal surface of the union nut 22 with its radially external surface. The wire may fill the groves such that it fixes the union nut 22 and the adaptor 21 with respect to each other in an axial direction of the connector 20.

The O-rings 25 shown in the various embodiments of the invention prevent the intrusion of external humidity to the gasket 24.

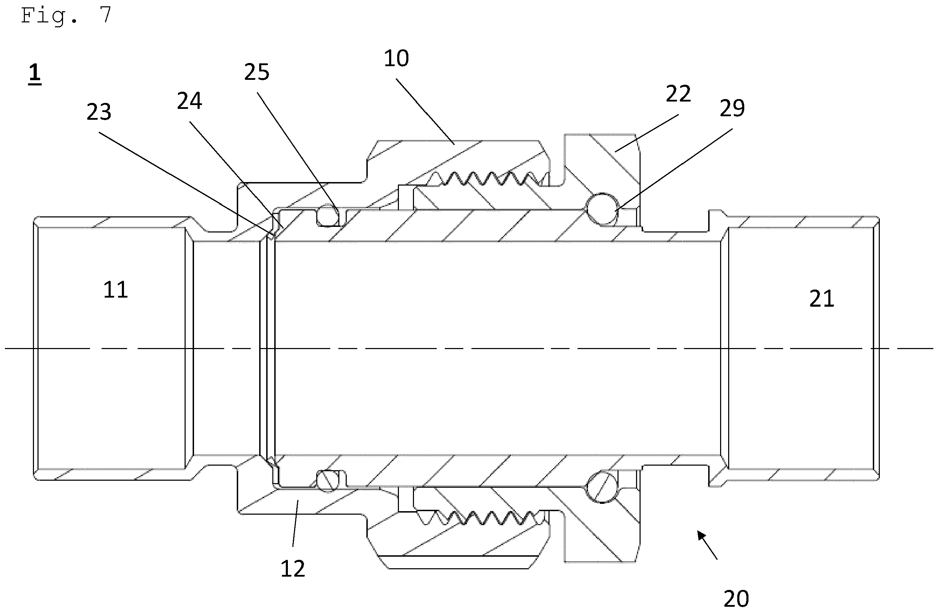

Figure 7 is a detailed cross-sectional view of the connector module 1 according to the second aspect of the invention. The connector module 1 according to the second aspect may serve the same general purpose as the first aspect, that is the provision of means for connecting fluid conduits in an improved way.

The connector module 1 is provided for fluidly connecting two or more external fluid conduits 40 shown in figure 3. The external fluid conduits 40 are connectable to two fluid ports 11, 12 of a housing 10. The external fluid conduits 40 may be connected directly to one of the fluid ports 11 and indirectly via e.g. a connector 20 or more specifically via an adaptor 21 of the connector 20 to the other fluid port 12.

The connector 20 comprises the adaptor 21, a union nut 22, a union nut interface 23, a metal gasket 24 and at least one O-ring 25, wherein the metal gasket 24 is deformed by the union nut 22 pressing it via the adaptor 21 against the union nut interface 23 and the metal gasket 24 fluidly seals the adaptor 21 to the union nut interface 23. The connector 20 components facilitate the connection of external fluid conduits 40 to each other. The union nut interface 23 may be defined as a portion against which the metal gasket 24 is pressed by the union nut 22. The union nut 22 may press the metal gasket 24 via e.g. the adaptor 21. The union nut interface 23 may be understood as a portion against which the metal gasket 24 is supported.

The metal gasket 24 is shown to be bent away from the adaptor 21. In an alternative embodiment, the metal gasket 24 may be bent towards the adaptor 21. Alternatively, a more complex metal gasket 24 geometry may be provided, in which the metal gasket 24 is bent at more than one edge.

The union nut interface 23 may be formed integrally with the housing 10. The union nut interface 23 may be a hollow circular plane extending preferably or at least partially in the radial direction of the connector module 1. The union nut interface 23 may be provided at an axially central position of the housing 10, preferably more than a third of the length of the housing 10 away from either of its axial ends. It may be the portion of the housing 10 with the smallest internal diameter.

In this basic embodiment of the second aspect of the invention, no function module 2 such as the previously described solenoid valve, stepper valve etc. may be connected to the housing 10.

The union nut 22 is screwed into the housing 10 such that the union nut 22 may be positioned at least partially within the housing 10. Only the head of the union nut 22 may be positioned outside of the housing 10. The union nut 22 may be positioned at least partially between the radially inner adaptor 21 and the radially outer housing 10. The union nut 22 may be positioned around the adaptor 21 along the entire length of the union nut 22.

The union nut 22 may comprise an external thread for connecting the union nut 22 to the housing 10. The housing 10 may comprise a corresponding internal thread. The thread of the housing 10, the adaptor 21 and the union nut 22 may be provided on the same axial end of the housing 10. The threads of the union nut 22 and the housing 10 may be provided between the O-ring 25 and the gasket 24 on the one side and a connection ring 29 on the other side. The connection ring 29 may be provided for transferring an axial force between the union nut 22 and the adaptor 21. The connection ring 29 may be provided at the head of the union nut 22.

The connector module 1 of the second aspect may comprise any of the presently described features and especially any of the features described with reference to figures 1 to 6.

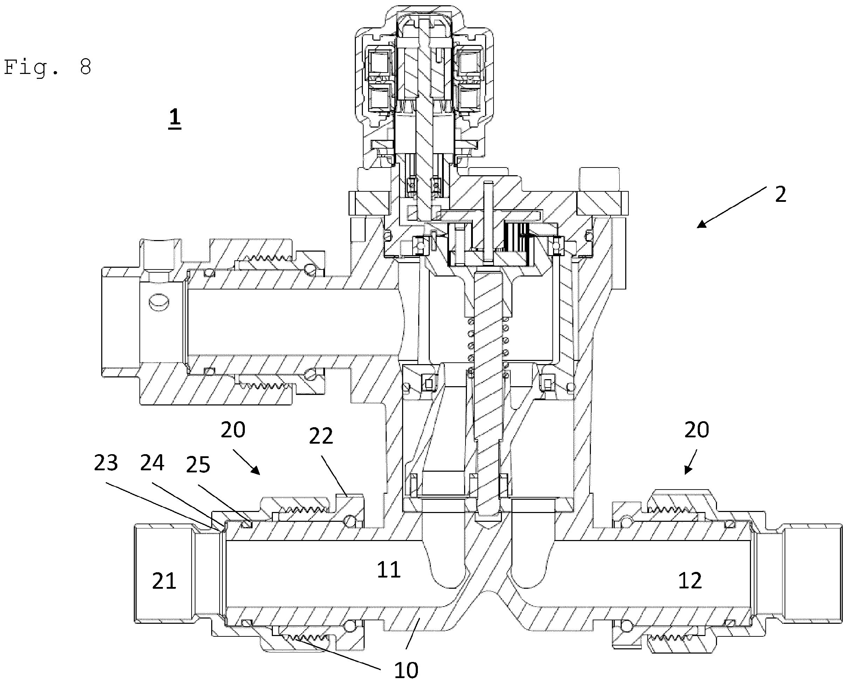

Figure 8 is a cross-sectional view of the connector module 1 according to the second aspect of the invention. Here, the housing 10 of the connector module 1 is connected to a function module 2, which may comprise some e.g. valve elements. The housing 10 of the embodiment of figure 8 provides a more complex functionality than the simple connection of fluid conduits provided by the embodiment shown in figure 7.

The housing is shaped more complex than the previous embodiment such that it comprises at least two connectors 20. As in the previous aspect of the invention, the metal gasket 24 may be made of a softer metal alloy than its adjacent components. Similarly, the adaptor 21 may be a copper plated adaptor 21.

The function module 2 may be identical to the housing 10. Both components may be formed as one integral part or they may be formed as separate parts, which may be spaced apart or in close contact with each other.

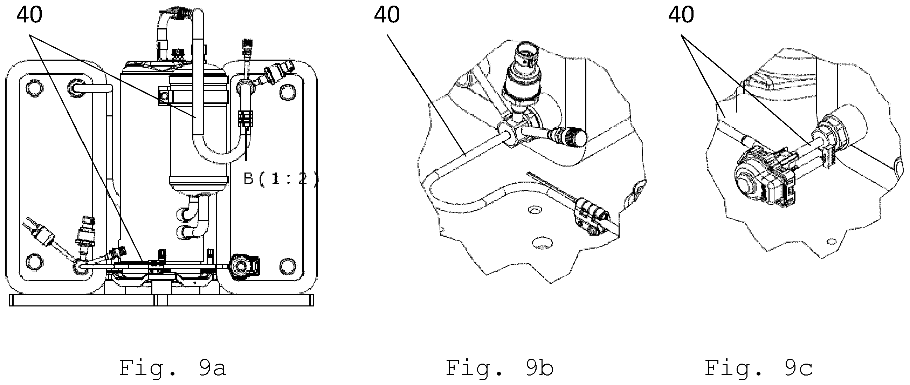

Figures 9a to 9c show various implementations of the connector module in the context of a heat exchanger application. Possible implementation include the connection of fluid conduits 40 to heat exchanger components and/or to other fluid conduits 40. Clearly the use of the presently described connector module is not limited to heat exchangers. The connector module may be used with any application requiring fluid conduits and corresponding fluid transfer.

## Claims

1. Connector module (1) for fluidly connecting a fluid system to a function module (2), comprising a housing (10) with at least one fluid port (11) and at least one connector (20) fluidly connected to the fluid port (11), the connector (20) comprising an adaptor (21), a union nut (22), a union nut interface (23), a metal gasket (24) and at least one O-ring (25), wherein the metal gasket (24) is deformed by the union nut (22) pressing it via the adaptor (21) against the union nut interface (23) and the metal gasket (24) fluidly seals the adaptor (21) to the union nut interface (23).

2. Connector module (1) according to claim 1, **characterized in that** the metal gasket (24) is deformed by the union nut (22) pressing against the union nut interface (23) such that the deformed metal gasket (24) comprises at least two distinct sealing portions (241, 242), which are angled to each other.

3. Connector module (1) according to claim 2, **characterized in that** a first sealing portion (241) extends in a radial direction of the connector (20) and/or is of a circular shape with a preferably centrally positioned circular opening and/or that a second sealing portion (242) is of a conical shape.

4. Connector module (1) according to any of the previous claims, **characterized in that** the metal gasket (24) comprises a hollow cylindrical portion (243) extending in an axial direction of the connector (20), wherein preferably the hollow cylindrical portion (243) is provided between either of the adaptor (21) or union nut interface (23) and the union nut (22).

5. Connector module (1) according to any of the previous claims, **characterized in that** at least one of the adaptor (21) and the union nut interface (23) comprises a protrusion (27) and/or a recess (28) for pressing against the metal gasket (24) and/or that the union nut interface (23) is formed integrally with or brazed to the housing (10).

6. Connector module (1) according to any of the previous claims, **characterized in that** a contact portion (26) is provide for transmitting a force between the union nut (22) and the adaptor (21), wherein preferably the contact portion (26) comprises a toroidal component contacting the union nut (22) and the adaptor (21) and/or contact surfaces of the union nut (22) and the adaptor (21).

7. Connector module (1) according to any of the previous claims, **characterized in that** the union nut (22) is a male or a female union nut (22).

8. Connector module (1) according to any of the previous claims, **characterized in that** the connector module (1) is connected to a function module (2) and/or comprises at least two connectors (20) and/or that the housing (10) comprises at least two fluid ports (11, 12) and/or that the metal gasket (24) is made of a softer metal alloy than its adjacent components and/or that the adaptor (21) is a copper plated adaptor (21).

9. Assembly comprising a connector module (1) according to claim 8, **characterized in that** the function module (2) comprises a solenoid valve with or without a servo mechanism, a stepper valve, a check valve, a sight glass, a filter dryer, a dryer, a temperature sensor, a pressure sensor, a preferably brazed plate heat exchanger and/or a service valve.

10. Connector module (1) for fluidly connecting two or more external fluid conduits (40), comprising a housing (10) with at least two fluid ports (11, 12) and at least one connector (20) fluidly connected to one of the fluid ports (11, 12), the connector (20) comprising an adaptor (21), a union nut (22), a union nut interface (23), a metal gasket (24) and at least one O-ring (25), wherein the metal gasket (24) is deformed by the union nut (22) pressing it via the adaptor (21) against the union nut interface (23) and the metal gasket (24) fluidly seals the adaptor (21) to the union nut interface (23).

11. Connector module (1) according to any of the previous claims, **characterized in that** the union nut (22) is screwed into the housing (10) and/or that the union nut (22) is positioned at least partially between the radially inner adaptor (21) and the radially outer housing (10).

12. Connector module (1) according to claim 10 and any of claims 2 to 7.

13. Connector module (1) according to claim 10, **characterized in that** the connector module (1) is connected to a function module (2) and/or comprises at least two connectors (20) and/or that the metal gasket (24) is made of a softer metal alloy than its adjacent components and/or that the adaptor (21) is a copper plated adaptor (21).

14. Method for fluidly connecting a fluid system to a connector module (1) according to any of claims 1 to 8 and 10 to 13, the method comprising the steps of:
inserting the adaptor (21) into the union nut (22);
brazing an external fluid conduit (40) to the adaptor (21);
providing the metal gasket (24) between the adaptor (21) and the union nut interface (23);
providing the O-ring to the adaptor (21); and
screwing the union nut (22) to the union nut interface (23) while deforming the gasket (24).
